# EUROPEAN PATENT SPECIFICATION

(11) **EP 3 513 908 B1**
(45) Date of publication and mention of the grant of the patent: **20.04.2022**
(21) Application number: 19150550.2
(22) Date of filing: 07.01.2019
(51) Int. Cl.: B23Q 5/26, F15B 11/06

(54) **PNEUMATIC ACTUATION SYSTEM AND MACHINE TOOL ON WHICH SAID SYSTEM IS INSTALLED**
PNEUMATISCHES BETÄTIGUNGSSYSTEM UND WERKZEUGMASCHINE MIT EINEM SOLCHEN SYSTEM
SYSTEME D'ACTIONNEMENT PNEUMATIQUE ET MACHINE-OUTIL AVEC UN TEL SYSTEME

(30) Priority: 22.01.2018 IT 201800001630
(43) Date of publication of application: 24.07.2019
(73) Proprietor: SCM Group S.p.A., 47921 Rimini (RN) (IT)
(72) Inventor: GALLO, Gianluca, 47921 RIMINI (IT); D'AURIA, Marcello, 47921 RIMINI (IT)
(74) Representative: Tiburzi, Andrea

(56) References cited:
- EP-A1- 2 700 462
- AU-A- 2 950 771
- DE-A1-102008 029 074
- GB-A- 2 095 593
- US-A- 4 257 489

## Description

This invention relates to a pneumatic actuation system and a machine tool on which said system is installed.

More in detail, the invention relates to a system of the said type, designed and manufactured in particular for actuating a machine tool from a non-operating position to an operating position, but which can be used in any case in which it is necessary to actuate a device moving it in two different operating positions, which allows a high level of operational efficiency.

The description below relates to the operation of a machine tool for machining wood, but it is quite apparent how the same should not be considered limited to this specific use.

As is well known, in the sector of machine tools for machining, for example, wood, use is made of multi-axis heads, which are able to orient in space a spindle on which is installed a suitable tool or machining aggregate, such as a milling cutter, a drilling bit and the like.

Electrical type connections are normally necessary for operation of the spindle.

Moreover, generally, the machine tool present on an aggregate can be positioned in such a way as to adopt a withdrawn non-operating position and an extracted operating position. For this reason, there are pneumatic systems comprising a piston-cylinder assembly, wherein the piston is moved by means of pneumatic actuators or members.

An example of a multi-axis head (in particular, with five or six axes) in which the actuators are both electric and pneumatic is described in European patent document EP1640112B1. The document describes in particular a multi-axis machining head for machining wood, having a housing for a spindle, which can be rotated about an axis, which has in particular an interface for the power supply, in particular electricity, and/or compressed air, for the operation of the machining aggregate.

A technical problem of the pneumatic actuation systems according to the prior art is the fact that it is generally necessary to provide two different compressed air lines, for the extraction and for the withdrawal of the piston. This results in the need to provide a double pneumatic circuit, with evident increase in the cost and the overall dimensions of the actuation systems.

It is clear how this procedure is onerous in terms of efficiency and industrial costs.

The relevant prior art includes the patent application AU 2950771 A, on which the preamble of appended claim 1 is based, and the patent application EP 2700462 A1.

In light of the above, it is therefore the aim of the invention to provide a pneumatic actuation system which can operate with a single compressed air supply line.

The aim of the invention is also to provide a pneumatic actuation system which can structurally and economically advantageous.

The specific object of the invention is a pneumatic actuation system for machining aggregates, in particular equipped with at least one machine tool, said pneumatic actuation system being connectable to an air supply line, comprising at least one piston-cylinder assembly, having a cylinder and a piston, wherein said cylinder has a first chamber, such that, when said first chamber is supplied with compressed air, said piston is actuated so as to allow the actuation of the respective machining aggregate, and a pressure adjustment and control unit, which can be connected to said air supply line, characterised in that said adjustment and control unit is configured for switching and sending upon command the compressed air coming from said air supply line on said first chamber of said cylinder of said at least one piston-cylinder assembly.

Again according to the invention, said adjustment and control unit can comprise a control valve unit, designed to switch the pressure coming from said air supply line on said first chamber, and an adjustment valve unit for adjusting the pressure of the compressed air coming from said air supply line, wherein said control valve unit and said adjustment valve unit are connected together by means of an air control line and wherein said adjustment valve unit is connected to said air supply line.

Again according to the invention, said control valve unit can be positioned close to the respective machining aggregates and said adjustment valve unit can be positioned remotely relative to the respective machining aggregate.

Advantageously according to the invention, said control valve unit can comprise a first pneumatically controlled distribution valve, movable between a base position and a switching position, having an inlet, connected to said air supply line, and two diversion lines, designed to divert the compressed air coming from said air control line or from said air supply line, a switching spring positioned in such a way that said first distribution valve adopts said base position when it is at rest or in the release position, wherein, when said first distribution valve adopts said switching position, compressing said switching spring, one of said two diversion lines is connected to said first chamber of said cylinder of said at least one piston-cylinder assembly, and a control conduit, connected between said air control line or said air supply line, and said first distribution valve for the pneumatic control of the latter, such that, when the pressure on said control conduit exceeds a first predetermined threshold, said first distribution valve changes from said base position to said switching position.

Further, according to the invention, said cylinder of said piston-cylinder assembly can comprise a second chamber, and when said first distribution valve adopts said base position, a diversion line connects said air control line or said air supply line to said second chamber of said piston.

Again according to the invention, said at least one piston-cylinder assembly can comprise a return spring, arranged to keep raised the respective piston, said system can comprises a further piston-cylinder assembly comprising a respective first chamber and a respective return spring, arranged to keep raised the respective piston, and when said first distribution valve adopts said base position, the other diversion line connects said air control line or said air supply line to said first chamber of said piston of said further piston-cylinder assembly, thereby lowering said piston overcoming the resistance of said return spring, thereby raising the piston of the other piston-cylinder assembly.

Again according to the invention, said control valve unit can also comprise at least one pressure adjustment valve, positioned on said inlet conduit of the compressed air connected to the first chamber of said cylinder of said at least one piston-cylinder assembly.

Advantageously according to the invention, said adjustment valve unit can comprise a second distribution valve, preferably with electromechanical actuation, movable between a first position and a second position, connected at the inlet to said second distribution valve and at the outlet to a first diversion conduit and to a second diversion conduit, on which is positioned a pressure adjustment valve, designed to allow the limitation of the passage pressure to a second pressure threshold, and a selective valve to which can be connected at the inlet said first and second diversion conduit and at the outlet to said air control line.

Advantageously according to the invention, said control valve unit can comprise a pneumatically controlled bistable or flip-flop circuit, having at the inlet said air control line or said air supply line, and two outlets, the first of which connected to the first chamber of said cylinder of said piston-cylinder assembly.

Further according to the invention, said cylinder of said at least one piston-cylinder assembly comprises a second chamber, and the second outlet of said bistable or flip-flop circuit can be connected to said second chamber of said cylinder of said at least one piston-cylinder assembly.

Again according to the invention, said at least one piston-cylinder assembly can comprise a return spring, arranged to keep raised the respective piston, said system can comprises a further piston-cylinder assembly comprising a respective first chamber and a respective return spring, arranged to keep raised the respective piston, and the second outlet of said bistable or flip-flop circuit can be connected to said first chamber of said cylinder of said further piston-cylinder assembly.

Again according to the invention, said control valve unit can comprise two distribution valves and two diversion valves.

Advantageously according to the invention, said adjustment valve unit comprises an inlet distribution valve with electromechanical actuation, movable between a first position and a second position, to which is connected at the inlet said air supply line and at the outlet said air control line.

Further, according to the invention, said system can comprise a blowing device, connected to the conduit which connects said control valve unit to said first chamber.

Further, according to the invention, said piston may be connected to said machining aggregate.

The specific object of the invention is therefore a machine tool for machining workpieces, in particular pieces made of wood, plastic, glass and the like, comprising a base for supporting and locking at least one piece to be machined, a crossbeam positioned above said base and movable relative to it, and a multi-axis head slidably coupled to said crossbeam, and at least one machining aggregate coupled in a removable fashion to said multi-axis head, characterised in that it comprises a pneumatic actuation system according to any one of the preceding claims, said pneumatic actuation system being designed to actuate said machining aggregate.

Again according to the invention, said adjustment valve unit may be positioned on said transversal member, said control valve unit is positioned at said machining aggregate.

The invention is now described, by way of example and without limiting the scope of the invention, according to its preferred embodiments, with particular reference to the accompanying drawings, in which:
Figure 1 shows a basic diagram of a first embodiment of a pneumatic actuation system according to the invention;
Figure 2 shows a pneumatic diagram of a first embodiment of a pressure adjustment and control unit of the pneumatic system of Figure 1;
Figure 3 is a perspective view of the pneumatic actuation system according to the invention;
Figure 4 is a perspective partial cross-section view of the pneumatic actuation system of Figure 3;
Figure 5 shows a pneumatic diagram of a variant of the pneumatic system of Figure 2;
Figure 6 shows a pneumatic diagram of a second embodiment of the pneumatic actuation system according to the invention;
Figure 7 shows a pneumatic diagram of a variant of the pneumatic actuation system of Figure 6; and
Figure 8 shows a machine tool equipped with an actuation system according to the invention.

The similar parts will be indicated in the various drawings with the same numerical references.

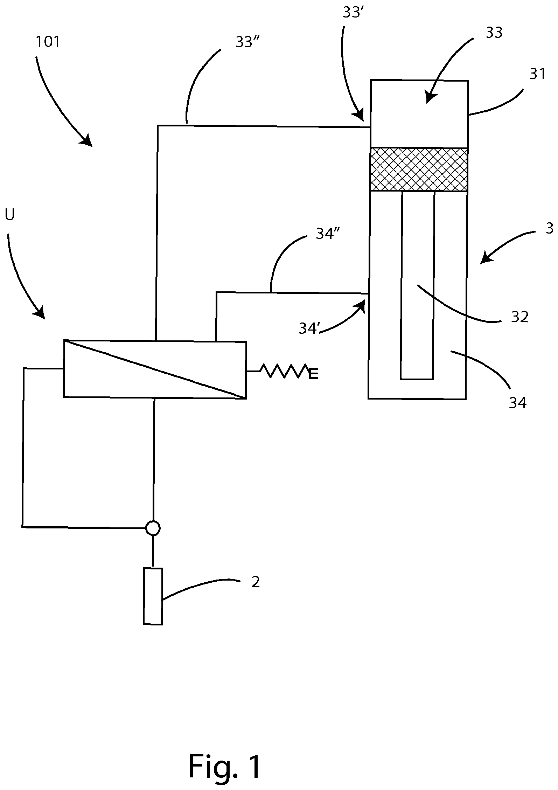

Figure 1 shows the basic diagram of a first embodiment of the pneumatic actuation system 1 according to the invention.

The system 1 can be connected to an air supply line 2 and basically comprises a piston-cylinder assembly 3, having a cylinder 31 and a piston 32, and a unit for adjustment and control of the pressure U, the latter connected to said air supply line 2 and to said piston-cylinder assembly 3, in order to move said piston 32.

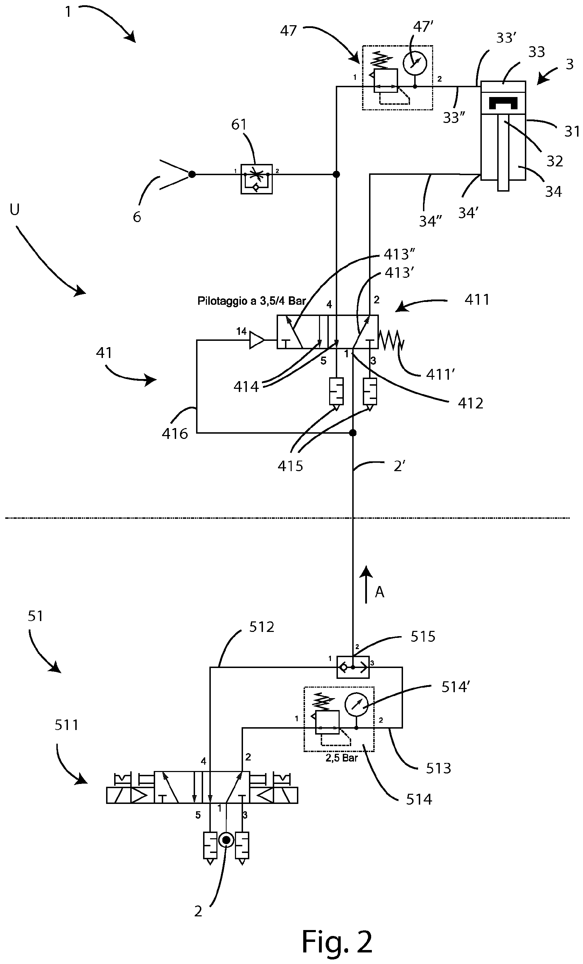

Figure 2 shows a first embodiment of a unit for adjustment and control of the pressure U, which comprises a pressure control valve unit 41 a pressure adjustment valve unit 51.

The cylinder 31 of said piston-cylinder assembly 3 has a first 33 and a second 34 chamber, separated by said piston 32.

Said cylinder 31 also has two compressed air inlet openings, indicated, respectively, with numerical references 33' and 34', respectively of said first 33 and second 34 chamber, connected to said unit for adjustment and control of the pressure U, respectively by means of the compressed air inlet conduits 33" and 34".

The piston 32 of said piston-cylinder assembly 3 is designed to be coupled to the machining unit which houses the cylinder, in which is installed the machine tool (not shown in the drawings) by way of a nonlimiting example of the type for machining wood, plastic, glass or the like.

Again with reference to Figure 2, it is possible to see in detail said first embodiment of the unit for adjustment and control of the pressure U, which, as mentioned, is connected to the air supply line 2.

More specifically, the control valve unit 41, which preferably but not necessarily is positioned at or close to the machining aggregate, is connected, by means of the air control line 2', to said pressure adjustment valve unit 51, which, on the other hand, is preferably but not necessarily positioned remotely with respect to said machining aggregate and is connected directly to said air supply line 2.

Said pressure control valve unit 41 comprises a first distribution valve 411, of the 5-way and 2-position type, thus movable between a base position and a switching position.

Said first distribution valve 411 has a switching spring 411', positioned in such a way as top make said first distribution valve 411 adopt said base position when it is at rest or in the release position.

Said first distribution valve 411 comprises an inlet opening 412, connected to said air supply line 2, two diversion lines 413' and 413", designed to divert the air coming from said air control line 2', and two vent lines, both indicated with numerical reference 414.

Said pressure control valve unit 41 also comprises a pair of vents 415.

More specifically, when said first distribution valve 411 adopts aid base position, in which said switching spring 411' is in the rest position, the diversion line 413' connects said air control line 2' to said conduit 34", which, as mentioned, is connected to said second chamber 34, whilst said conduit 33" is connected to a vent 415 through one of the vent lines 414; whilst, when said first distribution valve 411 adopts said switching position, compressing said switching spring 411', the diversion line 413" is connected to said inlet conduit of the compressed air 33", connected to said first chamber 33 of said cylinder 31, whilst said inlet conduit of the compressed air 34" to the other vent 415 through the other vent line 414 of said first distribution valve 411.

Moreover, the pressure control valve unit 41 also comprises a control conduit 416, on which is positioned a one-way valve 416'. Said control valve unit 41 also comprises a pressure adjustment valve 47, set in this embodiment to 1 Bar, equipped with a pressure gauge 47' positioned on said compressed air inlet conduit 33", connected to said first chamber 33 of said cylinder 31.

The pressure adjustment valve unit 51 is installed in this embodiment upstream of the machining aggregate.

The pressure adjustment valve unit 51 is designed to control the pressure and comprises a second distribution valve 511, of the 5-way and 2-position type with electromechanical actuation, thus movable between a first position and a second position.

Said air supply line 2 is connected at the inlet to said second distribution valve 511. Moreover, said second distribution valve 511 is connected at the outlet to a first diversion conduit 512 and to a second diversion conduit 513.

On said second diversion conduits 513 is positioned a pressure adjustment valve 514, set in this embodiment to 2.5 Bar, which is also equipped with a pressure gauge 514'.

Said first diversion conduit 512 and second conduit 513 are connected to a selective valve 515, connected at the outlet to said air control line 2'. Said selective valve 515 performs an "OR" logic function on the pneumatic signals coming from said first diversion conduit 512 and second diversion conduit 513.

Said pneumatic actuation system 1 also comprises a blowing device 6, connected to the conduit 33" which connects said first distribution valve 411 to said pressure adjustment valve 47, through a one-way flow adjustment valve 61.

The operation of the pneumatic actuation system 1 described above is as follows.

When the second distribution valve 511 is in the position in which the supply line 2 is connected to said diversion conduit 513, the compressed air passes through said pressure adjustment valve 514 at a pressure of 2.5 Bar, and is conveyed in said air control line 2'. The compressed air passes through said control conduit 416 and the relative one-way valve 416'.

However, the pressure on said air control line 2' is adjusted in such a way that it is not sufficient to overcome the resistance of the switching spring 411'.

For this reason, said first distribution valve 411 is in said base position and the compressed air passes through said diversion line 413', passing through the conduit 34", thereby supplying said second chamber 34 of said cylinder 31 and keeping the piston 32 in the withdrawn position.

When, on the other hand, said second distribution valve 51 is in the position in which the supply line 2 is connected to said diversion conduit 512, the compressed air supply, which passes through selective valve 515, without undergoing any pressure regulation, passing through the air control line 2', reaches the control valve unit 41, passes through said control conduit 416 and supplies the compressed air at a pressure sufficient to change said first distribution valve 411 from said base position to said switching position, compressing said switching spring 411'.

For this reason, the compressed air passes through said diversion line 413", then passing through the conduit 33" and in particular through the pressure adjustment valve 47, thereby supplying said first chamber 33 of said cylinder 31 and lowering the piston 32.

Moreover, part of the compressed air passing through said conduit 33" reaches the blowing device 6, to remove the machining swarf and dust from the work area.

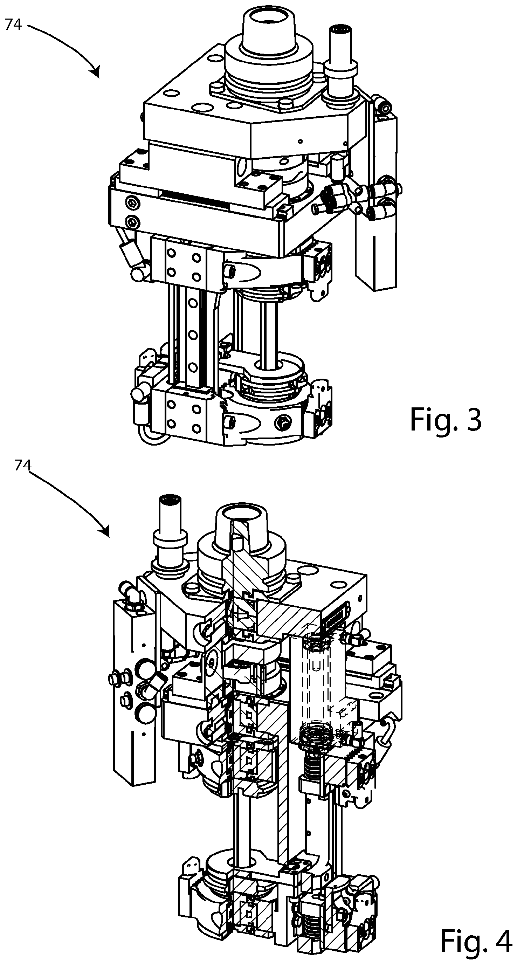

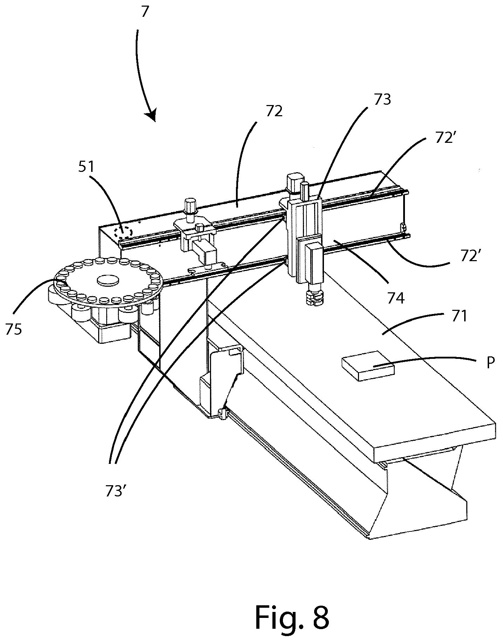

Figures 3 and 4 show a possible structure of a machining aggregate indicated with the reference numeral 74, as in Figure 8.

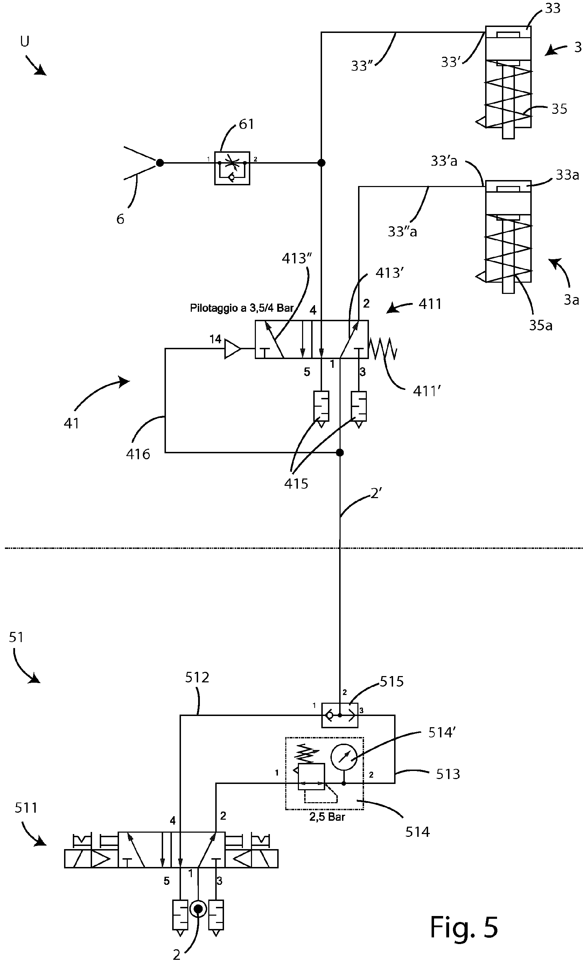

Figure 5 shows a variant of the pneumatic actuation system 1 which comprises a further piston-cylinder assembly 3a. Moreover, the two piston-cylinder assemblies 3 e 3a are now of the type equipped with a single pneumatic chamber, respectively indicated with 33 and 33a, and a return spring, indicated respectively with reference 35 for the first piston-cylinder assembly 3 and with reference 35a for the second piston-cylinder assembly 3a.

Moreover, when said first distribution valve 411 adopts aid base position, in which said switching spring 411' is in the rest position (i.e. not compressed), the diversion line 413' connects said air control line 2' to said conduit 33"a, whilst, when said first distribution valve 411 adopts said switching position, compressing said switching spring 411', the diversion line 413" is connected to said inlet conduit of the compressed air 33", connected to said first chamber 33 of said cylinder 31 of the first piston-cylinder assembly 3.

When the supply line 2 does not supply compressed air, compressed air does not arrive in the conduits 33" and 33"a. In that case, the return springs 35 and 35a of each of the piston-cylinder assemblies 3 and 3a keep the respective pistons 32 e 32a raised.

When the supply line 2 supplies compressed air and the second distribution valve 511 is in the position in which the supply line 2 is connected to said diversion conduit 513, the compressed air passes through said pressure adjustment valve 514 at a pressure of 2.5 Bar, and is conveyed in said air control line 2'. The compressed air passes through said control conduit 416 and the relative one-way valve 416'.

Also in this case, the pressure on said air control line 2' is adjusted in such a way that it is not sufficient to overcome the resistance of the switching spring 411', leaving said first distribution valve 411 in said base position.

The compressed air passes through said diversion line 413', also passing through the conduit 34"a, thereby supplying said first chamber 33a of said second piston-cylinder 3a extracting the respective piston 32a.

When, on the other hand, said second distribution valve 51 is in the position in which the supply line 2 is connected to said diversion conduit 512, similarly to the previous case, said first distribution valve 411 moves from said base position to said switching position, compressing said switching spring 411', similarly to the diagram of Figure 2.

For this reason, the compressed air passes through said diversion line 413", passing through the conduit 33".

In this way, the supply of compressed air on the first chamber 33a of the cylinder 31a of the second piston-cylinder assembly 3a is interrupted, so that the respective return spring 35a raises the piston 32a; moreover, at the same time, the compressed air now diverted in the first chamber 33 of said cylinder 31 of the first piston-cylinder assembly 3 lowers the relative piston 32.

Lastly, as in the previous case, part of the compressed air passing through said conduit 33" reaches the blowing device 6, to remove the machining swarf and dust from the work area.

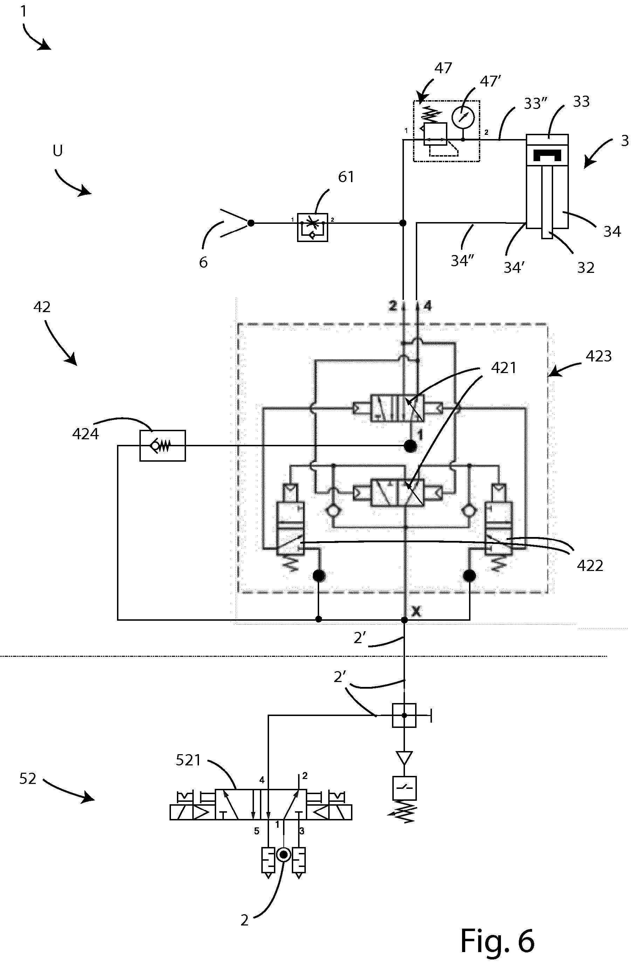

Figure 6 shows a second embodiment of a unit for adjustment and control of the pressure U, which comprises, also in this case, a pressure control valve unit 42 and a pressure adjustment valve unit 52.

The control valve unit 42 comprises two distribution valves 421, of the 5-way and 2-position type, and two diversion valves 422, connected so as to form a pneumatically controlled bistable or flip-flop circuit 423.

More specifically, the inlet to one of said two distribution valves 421 is connected to the air control line 2', by means of a non-return safety valve 424, and the outlet is connected to said first 33" and said second 34" conduit.

The adjustment valve unit 52 comprises an inlet distribution valve 521 of the 5-way and 2-position type with electromechanical actuation, for remote control, thus movable between a first position and a second position.

Said air supply line 2 is connected at the inlet to said inlet distribution valve 521.

Moreover, said distribution valve 521 is connected at the outlet to the air control line 2'.

On the compressed air inlet conduit 33" there is also a pressure adjustment valve 47, with relative pressure gauge 47', and a blowing device 6.

In this configuration, when in a first step said inlet distribution valve 521 connects, following a suitable electromechanical command, said air supply line 2 to said air control line 2', said bistable circuit 423 allows the passage of compressed air through said inlet conduit of the compressed air 34", raising the piston 32, at the same time allowing the switching of the bistable circuit 423.

Subsequently, during a second operating step, the inlet distribution valve 521 interrupts, following a second electromechanical command, the connection of said air supply line 2 with said air control line 2'.

When, in a third operational step, said inlet distribution valve 521 connects, following a new electromechanical command, said air supply line 2 to said air control line 2', said bistable circuit 421 allows the passage of compressed air this time through said compressed air inlet conduit 33", thereby lowering the piston 32, thanks to the compressed air, which passes through the pressure adjustment valve 427, thereby supplying said first chamber 33 of said cylinder 31.

Moreover, part of the compressed air passing through said conduit 33" reaches the blowing device 6, to remove the machining swarf and dust from the work area.

At the same time the bistable circuit 421 again changes status, setting up for the subsequent pressure pulse, so as to again introduce compressed air into the conduit 34". At the same time there is the switching of the bistable circuit 423.

Lastly, in a third step the inlet distribution valve 521 is switched again, to restart the operating cycle from the first operating step.

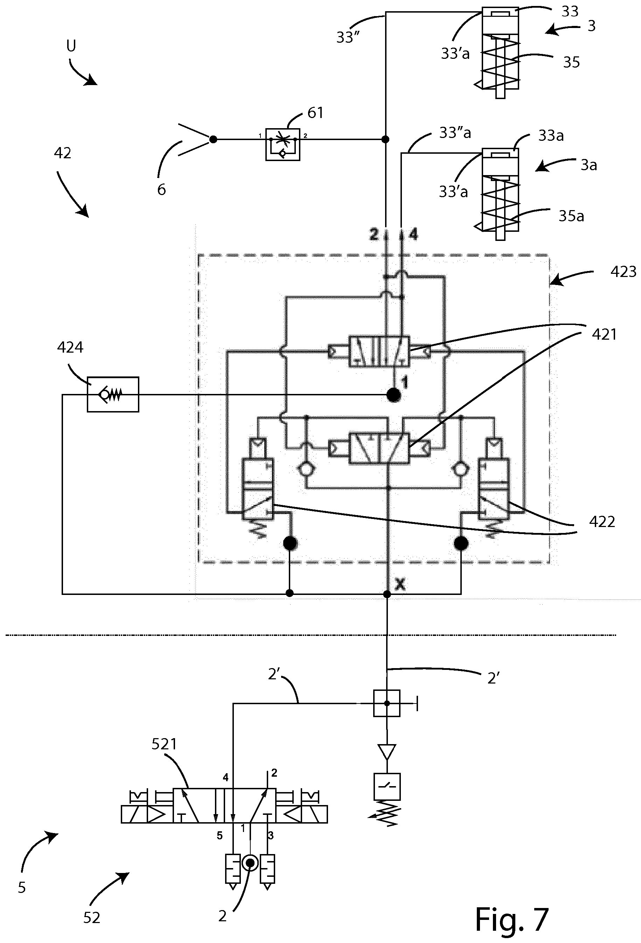

Figure 7 shows a variant of the pneumatic actuation system of Figure 6 which comprises a further piston-cylinder assembly 3a.

In this case, as shown in Figure 5, there are two piston-cylinder assemblies, indicated, respectively, also in this case, with the numerical references 3 e 3a, equipped with a single pneumatic chamber, respectively indicated with 33 and 33a, and a return spring, indicated respectively, also in this case, with reference 35 for the first piston-cylinder assembly 3 and with reference 35a for the second piston-cylinder assembly 3a.

The operation of the pneumatic actuation system 1 shown in Figure 7 is substantially similar to that shown in Figure 6. In this case, however, when the pneumatically controlled bistable or flip-flop circuit 423 switches, it diverts the compressed air which arrives from the air supply line 2 on one of said first chambers 33 or 33a of said first or second piston-cylinder assembly 3 or 3a.

Naturally, when the bistable circuit 423 supplies alternatively the compressed air, for example, on the first piston-cylinder assembly 3, thereby lowering the relative piston 32, overcoming the return force of the return spring 35, the piston 32a of the other piston-cylinder assembly 3a, the first chamber 33a of which is not supplied, is raised, thanks to the action of the respective return spring 35a. Vice versa, when the bistable circuit 423 supplies the compressed air on the second piston-cylinder assembly 3a.

Figure 8 shows a machine tool 7 for machining pieces P, in particular pieces made of wood, plastic, glass and the like, which comprises a base 71, for supporting and locking at least one piece P to be machined, and a crossbeam 72, positioned above said base 71 and movable relative to it.

Sid machine tool 7 also comprises a multi-axis head 73, slidably coupled to said crossbeam 72, by means, for example, of slides 73', slidably coupled to respective guides 72', positioned on said crossbeam 72.

The machine tool 7 also comprises at least one machining aggregate 74 removably coupled with said multi-axis head 73, and a tool holder 75, for changing tools during the various machining operations.

Said machine tool 7 comprises a pneumatic actuation system 1, for actuating sad machining aggregate 74.

More specifically, said adjustment valve unit 51 is positioned on said transversal member 72, whilst said control valve unit 41 (not shown in Figure 8) is positioned at said machining aggregate 74.

An advantage of the invention is to allow the control of one or more piston-cylinder assemblies by means of a single compressed air supply line. This enables a reduction in the overall costs of the system, as well as a reduction in the overall dimensions.

The present invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. Pneumatic actuation system (1) for machining aggregates, in particular provided with at least one processing tool, said pneumatic actuation system (1) being connectable to a pneumatic supply line (2), comprising
at least one piston-cylinder unit (3, 3a), having a cylinder (31, 31a) and a piston (32, 32a), wherein said cylinder (31, 31a) has a first chamber (33, 33a), such that when said first chamber (33, 33a) is supplied with compressed air, said piston (32, 32a) is actuated so as to allow the actuation of the respective machining aggregate, and
a pressure adjustment and control unit (U), connectable to said pneumatic supply line (2),
wherein said adjustment and control unit (U) is configured to switch and send upon command the compressed air coming from said pneumatic supply line (2) to said first chamber (33, 33a) of said cylinder (31, 31a) of said at least one piston-cylinder unit (3, 3a),
**characterized in that**
said adjustment and control unit (U) comprises a control valve group (41, 42), adapted to switch the pressure coming from said supply pneumatic line (2) on said first chamber (33, 33a), and an adjustment valve group (51, 52) for adjusting the compressed air pressure coming from said supply pneumatic line (2),
wherein said control valve group (41, 42) and said adjustment valve group (51, 52) are connected to each other by a pneumatic control line (2') and
wherein said adjustment valve group (51, 52) is connected to said supply pneumatic line (2).

2. System (1) according to the preceding claim, **characterized**
**in that** said control valve group (41, 42) is arranged close to the respective machining aggregates and
**in that** said adjustment valve group (51, 52) is arranged remote with respect to the respective machining aggregate.

3. System (1) according to any one of the preceding claims, **characterized in that** said control valve group (41) comprises
a pneumatic controlled first distributing valve (411), movable between a base position and a switching position, having an input (412), connected to said pneumatic supply line (2), and two deviation ways (413', 413"), designed to deviate the compressed air coming from said pneumatic control line (2') or from said pneumatic supply line (2),
a switching spring (411') arranged so as to make said first distributing valve (411) assume said base position, when it is at rest or in the release position, wherein, when said first distributing valve (411) assumes said switching position, bringing into compression said switching spring (411'), one of said two deviation ways (413") is connected to said first chamber (33) of said cylinder (31) of said at least one piston-cylinder unit (3), and
a driving conduit (416), connected between said pneumatic control line (2') or said pneumatic supply line (2), and said first distribution valve (411) for pneumatic control of the latter, such that, when the pressure on said driving conduit (416) exceeds a first predefined threshold, said first distributing valve (411) passes from said base position to said switching position.

4. System (1) according to the preceding claim, **characterized**
**in that** said cylinder (31) of said piston-cylinder unit (3) comprises a second chamber (34), and
**in that**, when said first distribution valve (411) assumes said base position, a deviation way (413') connects said pneumatic control line (2') or said supply pneumatic line (2) to said second chamber (34) of said piston (31).

5. System (1) according to claim 4, **characterized in that** said at least one piston-cylinder unit (3) comprises a return spring (35), arranged to keep the respective piston (32) raised,
**in that** it comprises a further piston-cylinder unit (3a) comprising a respective first chamber (33a) and a respective return spring (35a), arranged to keep the respective piston (32a) raised, and
**in that** when said first distribution valve (411) assumes said base position, the other deviation way (413') connects said pneumatic control line (2') or said supply pneumatic line (2) to said first chamber (33a) of said piston (31a) of said further piston-cylinder unit (3a), thus lowering said piston (31a), overcoming the resistance of said return spring (35a), thereby raising the piston (32) of the other piston-cylinder unit (3).

6. System (1) according to any one of claims 3-5, **characterized in that** said control valve group (41) also comprises at least one pressure regulating valve (47), arranged on said compressed air inlet conduit (33", 33"a), connected with the first chamber (33, 33a) of said cylinder (31, 31a) of said at least one piston-cylinder unit (3, 3a).

7. System (1) according to any one of claims 3-6, **characterized in that** said adjustment valve group (51) comprises
a second distributing valve (511), preferably electromechanically actuated, movable between a first position and a second position, connected to the inlet of said second distribution valve (511) and to the outlet of a first deflection conduit (512), and a second deflection conduit (513), on which a pressure regulating valve (514) is arranged, adapted to allow the limitation of the passage pressure to a second pressure threshold, and
a selective valve (515), to which said first (512) and second (513) diverting conduits are connected to the inlet and said pneumatic control line (2') is connected to the outlet.

8. System (1) according to any one of claims 1 or 2, **characterized in that** said control valve assembly (42) comprises a pneumatic controlled bistable or flip-flop circuit (423), with inlet said pneumatic control line (2') or said pneumatic supply line (2), and two outlets, the first of which connected to the first chamber (33, 33a) of said cylinder (31, 31a) of said piston-cylinder unit (3, 3a).

9. System (1) according to the preceding claim, **characterized**
**in that** said cylinder (31) of said at least one piston-cylinder unit (3) comprises a second chamber (34), and
**in that** the second output of said bistable or flip-flop circuit (423) is connected to said second chamber (34) of said cylinder (31) of said at least one piston-cylinder unit (3).

10. System (1) according to claim 8, **characterized**
**in that** said at least one piston-cylinder unit (3) comprises a return spring (35), arranged to keep the respective piston (32) raised,
**in that** it comprises a further that piston-cylinder unit (3a), comprising a respective first chamber (33a) and a respective return spring (35a), arranged to keep the respective piston (32a) raised, and
**in that** the second outlet of said bistable or flip-flop circuit (423) is connected to said first chamber (33a) of said cylinder (31a) of said further piston-cylinder unit (3a).

11. System (1) according to any one of claims 8-10, **characterized in that** said control valve assembly (42) comprises two distributor valves (421) and two deflection valves (422).

12. System (1) according to any one of claims 8-11, **characterized in that** said adjustment valve group (52) comprises an electromechanically actuated inlet distribution valve (521), movable between a first position and a second position, which said pneumatic supply line (2) is connected to the inlet and said pneumatic control line (2') to the outlet.

13. System (1) according to any of the claims 1-10, **characterized in that** it comprises a blower (6), connected to the conduit (33", 33"a) connecting said control valve group (41, 42) to said first chamber (33, 33a).

14. System (1) according to any one of the preceding claims, **characterized in that** said piston (32, 32a) is connected to said machining aggregate.

15. Machine tool (7) for machining workpieces, in particular pieces made of wood, plastic, glass and the like, comprising
a base (71) for supporting and blocking at least one piece (P) to be machined,
a crossbeam (72) arranged above said base (71) and movable with respect thereto, and
a multi-axis head (73) slidably coupled with said crossbeam (72), and
at least one machining aggregate (74) removably coupled to said multi-axis head (73),
**characterized in that** it comprises a pneumatic actuation system (1) according to any one of the preceding claims, said pneumatic actuation system (1) being adapted to actuate said machining aggregate (74).

16. Machine tool (7) according to the preceding claim, **characterized in that** said adjustment valve group (51, 52) is arranged on said crossbeam (72), said control valve group (41, 42) is arranged in correspondence of said machining aggregate (74).

## Patentansprüche

1. Pneumatische Betätigungsanlage (1) für Bearbeitungsaggregate, insbesondere mit mindestens einem Verarbeitungswerkzeug ausgestattet, wobei besagte pneumatische Betätigungsanlage (1) an eine pneumatische Versorgungsleitung (2) angeschlossen werden kann, bestehend aus
mindestens einer Kolben-Zylindereinheit (3, 3a), die einen Zylinder (31, 31a) und einen Kolben (32, 32a) aufweist, wobei besagter Zylinder (31, 31a) eine erste Kammer (33, 33a) aufweist, so dass, wenn besagte erste Kammer (33, 33a) mit Druckluft versorgt wird, besagter Kolben (32, 32a) betätigt wird, um die Betätigung des jeweiligen Bearbeitungsaggregats zu ermöglichen, und
einer Druckverstell- und Steuereinheit (U), die an besagte pneumatische Versorgungsleitung (2) anschließbar ist,
wobei diese Verstell- und Steuereinheit (U) konfiguriert ist, um die aus besagter pneumatischen Versorgungsleitung (2) stammende Druckluft auf Befehl schaltet und zu besagter erster Kammer (33, 33a) besagten Zylinders (31, 31a) besagter mindestens einen Kolben-Zylindereinheit (3, 3a) schickt,
**dadurch gekennzeichnet, dass**
besagte Verstell- und Steuereinheit (U) eine Steuerventilgruppe (41, 42) umfasst, angepasst zum Schalten des Drucks, der aus besagter pneumatischen Versorgungsleitung (2) besagter erster Kammer (33, 33a) stammt, und eine Verstellventilgruppe (51, 52) zum Einstellen des Druckluftdrucks, der aus besagter pneumatischen Versorgungsleitung (2) stammt,
wobei besagte Steuerventilgruppe (41, 42) und besagte Verstellventilgruppe (51, 52) miteinander über eine pneumatische Steuerungsleitung (2') verbunden sind und
wobei besagte Verstellventilgruppe (51, 52) an besagte pneumatische Versorgungsleitung (2) angeschlossen ist.

2. System (1) nach dem vorhergehenden Anspruch, **dadurch gekennzeichnet, dass**
besagte Steuerventilgruppe (41, 42) nahe der entsprechenden Bearbeitungsaggregate angeordnet ist und
besagte Verstellventilgruppe (51, 52) entfernt vom entsprechenden Bearbeitungsaggregat angeordnet ist.

3. System (1) nach einem beliebigen der vorhergehenden Ansprüche, **dadurch gekennzeichnet, dass** besagte Steuerventilgruppe (41)
ein pneumatisch gesteuertes erstes Verteilerventil (411) umfasst, das zwischen einer Basisposition und einer Schaltposition bewegbar ist, einen Eingang (412) aufweist, der mit besagter pneumatischen Versorgungsleitung (2) verbundenen ist, und zwei Verteilerwege (413', 413") hat, die zum Umlenken der aus besagter pneumatischen Steuerungsleitung (2') oder aus besagter pneumatischen Versorgungsleitung (2) stammenden Druckluft ausgelegt sind,
eine Schaltfeder (411') umfasst, die so angeordnet ist, dass besagtes erste Verteilerventil (411) besagte Basisposition einnimmt, wenn sie sich in Ruhe oder in der Auslösestellung befindet, wobei, wenn besagtes erstes Verteilerventil (411) besagte Schaltposition einnimmt, in der besagte Schaltfeder (411') komprimiert wird, einer besagter zwei Verteilerwege (413") mit besagter erster Kammer (33) besagten Zylinders (31) der besagten mindestens einen Kolben-Zylindereinheit (3) verbunden wird, und
eine Fahrleitung (416) umfasst, die zwischen besagter pneumatischen Steuerungsleitung (2') oder besagter pneumatischen Versorgungsleitung (2) verbunden ist, und besagtes erstes Verteilerventil (411) zur pneumatischen Steuerung der letzteren, so dass, wenn der Druck auf besagte Fahrleitung (416) über einer ersten vordefinierten Schwelle liegt, besagtes erstes Verteilerventil (411) von besagter Basisposition zu besagter Schaltposition übergeht.

4. System (1) nach dem vorhergehenden Anspruch, **dadurch gekennzeichnet,**
**dass** besagter Zylinder (31) besagter Kolben-Zylindereinheit (3) eine zweite Kammer (34) umfasst, und
**dass**, wenn besagtes erstes Verteilungsventil (411) besagte Basisposition einnimmt, ein Verteilerweg (413') besagte pneumatische Steuerungsleitung (2') oder besagte pneumatische Versorgungsleitung (2) sich mit besagter zweiter Kammer (34) besagten Kolbens (31) verbindet.

5. System (1) nach Anspruch 4, **dadurch gekennzeichnet,**
**dass** besagte mindestens eine Kolben-Zylindereinheit (3) eine Rückstellfeder (35) umfasst, die angeordnet ist, um den entsprechenden Kolben (32) oben zu halten,
**dass** es eine weitere Kolben-Zylindereinheit (3a) umfasst, die eine entsprechende erste Kammer (33a) und eine entsprechende Rückstellfeder (35a) umfasst, die angeordnet ist, um den entsprechenden Kolben (32a) oben zu halten, und
**dass**, wenn besagtes erstes Verteilerventil (411) besagte Basisposition einnimmt, der andere Verteilerweg (413') besagte pneumatische Steuerungsleitung (2') oder besagte pneumatische Versorgungsleitung (2) mit besagter erster Kammer (33a) besagten Kolbens (31a) besagter weiteren Kolben-Zylindereinheit (3a) verbindet, wodurch besagter Kolben (31a) abgesenkt wird, den Widerstand besagter Rückstellfeder (35a) überwindend und somit den Kolben (32) der anderen Kolben-Zylindereinheit (3) anhebend.

6. System (1) nach einem beliebigen der Ansprüche 3-5, **dadurch gekennzeichnet, dass** besagte Steuerventilgruppe (41) auch mindestens ein druckregulierendes Ventil (47) umfasst, das an besagter Drucklufteingangsleitung (33", 33"a) angeordnet ist, die mit der ersten Kammer (33, 33a) besagten Zylinders (31, 31a) besagter mindestens einen Kolben-Zylindereinheit (3, 3a) verbunden ist.

7. System (1) nach einem beliebigen der Ansprüche 3-6, **dadurch gekennzeichnet, dass** besagte Verstellventilgruppe (51) umfasst:
ein zweites Verteilerventil (511), vorzugsweise elektromechanisch betätigt, bewegbar zwischen einer ersten und einer zweiten Position, verbunden mit dem Eingang besagten zweiten Verteilerventils (511) und mit dem Ausgang einer ersten Umlenkleitung (512), und eine zweite Umlenkleitung (513), an der ein druckregulierendes Ventil (514) angeordnet ist, angepasst, um die Begrenzung des Durchgangsdrucks auf eine zweite Druckschwelle zu gestatten, und
ein selektives Ventil (515), an das besagte erste (512) und zweite (513) Umlenkungsleitungen am Eingang angeschlossen sind und besagte pneumatische Steuerungsleitung (2') mit dem Ausgang verbunden ist.

8. System (1) nach einem beliebigen der Ansprüche 1 oder 2, **dadurch gekennzeichnet, dass** besagte Steuerventil-Baugruppe (42) eine pneumatisch gesteuerte bistabile oder Flip-Flop-Schaltung (423) umfasst, mit dem Eingang besagter pneumatischen Steuerungsleitung (2') oder besagter pneumatischen Versorgungsleitung (2), und zwei Ausgängen, wobei ersterer mit der ersten Kammer (33, 33a) besagten Zylinders (31, 31a) besagter Kolben-Zylindereinheit (3, 3a) verbunden ist.

9. System (1) nach dem vorhergehenden Anspruch, **dadurch gekennzeichnet,**
**dass** besagter Zylinder (31) besagter mindestens einen Kolben-Zylindereinheit (3) eine zweite Kammer (34) umfasst, und
**dass** der zweite Ausgang besagter bistabilen oder Flip-Flop-Schaltung (423) an besagte zweite Kammer (34) besagten Zylinders (31) besagter mindestens einen Kolben-Zylindereinheit (3) angeschlossen ist.

10. System (1) nach Anspruch 8, **dadurch gekennzeichnet,**
**dass** besagte mindestens eine Kolben-Zylindereinheit (3) eine Rückstellfeder (35) umfasst, die angeordnet ist, um den entsprechenden Kolben (32) oben zu halten,
**dass** es eine weitere Kolben-Zylindereinheit (3a) umfasst, eine entsprechende erste Kammer (33a) und eine entsprechende Rückstellfeder (35a) umfasst, die angeordnet ist, um den entsprechenden Kolben (32a) oben zu halten, und
**dass** der zweite Ausgang besagter bistabilen oder Flip-Flop-Schaltung (423) an besagte erste Kammer (33a) besagten Zylinders (31a) besagter weiteren Kolben-Zylindereinheit (3a) angeschlossen ist.

11. System (1) nach einem beliebigen der Ansprüche 8-10, **dadurch gekennzeichnet, dass** besagte Steuerventil-Baugruppe (42) zwei Verteilerventile (421) und zwei Umlenkventile (422) umfasst.

12. System (1) nach einem beliebigen der Ansprüche 8-11, **dadurch gekennzeichnet, dass** besagte Verstellventilgruppe (52) ein elektromechanisch betätigtes Eingangsverteilerventil (521) umfasst, das zwischen einer ersten Position und einer zweiten Position bewegbar ist, wobei besagte pneumatische Versorgungsleitung (2) mit dem Eingang und besagte pneumatische Steuerungsleitung (2') mit dem Ausgang verbunden ist.

13. System (1) nach einem beliebigen der Ansprüche 1-10, **dadurch gekennzeichnet, dass** es ein Gebläse (6) umfasst, das mit der Leitung (33", 33"a) verbunden ist, besagte Steuerventilgruppe (41, 42) mit besagter ersten Kammer (33, 33a) verbindend.

14. System (1) nach einem beliebigen der vorhergehenden Ansprüche, **dadurch gekennzeichnet, dass** besagter Kolben (32, 32a) mit besagtem Bearbeitungsaggregat verbunden ist.

15. Werkzeugmaschine (7) für die Bearbeitung von Werkstücken, insbesondere von solchen aus Holz, Kunststoff, Glas und dergleichen, umfassend:
eine Basis (71) zum Stützen und Blockieren mindestens eines zu bearbeitenden Stücks (P),
eine Traverse (72), die oberhalb besagter Basis (71) angeordnet und beweglich zu dieser ist, und
einen Mehrachsenkopf (73), der gleitend mit besagter Traverse (72) gekoppelt ist, und
mindestens ein Bearbeitungsaggregat (74), abnehmbar gekoppelt an besagten Mehrachsenkopf (73),
**dadurch gekennzeichnet, dass** es eine pneumatische Betätigungsanlage (1) nach einem beliebigen der vorhergehenden Ansprüche umfasst, wobei besagte pneumatische Betätigungsanlage (1) angepasst ist zum Betätigen besagten Bearbeitungsaggregats (74).

16. Werkzeugmaschine (7) nach dem vorhergehenden Anspruch, **dadurch gekennzeichnet, dass** besagte Verstellventilgruppe (51, 52) auf besagter Traverse (72) angeordnet ist, wobei besagte Steuerventilgruppe (41, 42) entsprechend besagtem Bearbeitungsaggregat (74) angeordnet ist.

## Revendications

1. Système d'action pneumatique (1) pour l'usinage d'agrégats, notamment muni d'au moins un outil de traitement, ledit système d'action pneumatique (1) étant raccordable à une ligne d'alimentation pneumatique (2), comprenant
au moins une unité de piston-cylindre (3, 3a), dotée d'un cylindre (31, 31a) et d'un piston (32, 32a), dans lequel ledit cylindre (31, 31a) dispose d'une première chambre (33, 33a), de sorte que lorsque la première chambre (33, 33a) est alimentée en air comprimé, ledit piston (32, 32a) est actionné de manière à permettre l'actionnement de l'agrégat d'usinage respectif, et
un groupe de réglage et de commande de pression (U), raccordable à ladite ligne d'alimentation pneumatique (2),
dans lequel ladite unité de réglage et de commande (U) est configurée pour commuter et envoyer sur commande l'air comprimé venant de ladite ligne d'alimentation pneumatique (2) à ladite première chambre (33, 33a) dudit cylindre (31, 31a) dudit au moins une unité de piston-cylindre (3, 3a),
**caractérisé en ce que**
ladite unité de réglage et de commande (U) comprend un groupe de vanne de régulation (41, 42), adapté pour changer la pression provenant de ladite ligne pneumatique d'alimentation (2) sur ladite première chambre (33, 33a), et un groupe de soupape de réglage (51, 52) pour régler la pression d'air comprimé provenant de ladite ligne pneumatique d'alimentation (2),
dans lequel ledit groupe de vannes de régulation (41, 42) et ledit groupe de soupape de réglage (51, 52) sont raccordés l'un à l'autre par une ligne de commande pneumatique (2') et
dans lequel ledit groupe de soupape de réglage (51, 52) est raccordé à ladite ligne pneumatique d'alimentation (2).

2. Système (1) selon l'une quelconque des revendications précédentes, **caractérisé**
**en ce que** ledit groupe de vanne de régulation (41, 42) est disposé à proximité des granulats d'usinage respectifs et
**en ce que** ledit groupe de soupape de réglage (51, 52) est agencé à distance par rapport à l'agrégat d'usinage respectif.

3. Système (1) selon l'une quelconque des revendications précédentes, **caractérisé en ce que** ledit groupe de vanne de régulation (41) comprend
une première soupape de distribution à commande pneumatique (411), mobile entre une position de base et une position de commutation, dotée d'une entrée (412), raccordée à ladite ligne d'alimentation pneumatique (2), et de deux voies de déviation (413', 413), conçues pour dévier l'air comprimé provenant de ladite ligne de commande pneumatique (2') ou de ladite ligne d'alimentation pneumatique (2),
un ressort d'aiguillage (411') disposé de manière à ce que la première soupape de distribution (411) prenne ladite position de base, lorsqu'il est au repos ou en position de sortie, où, lorsque la première soupape de distribution (411) prend ladite position de commutation, portant en compression ledit ressort de commutation (411'), l'un de ces deux moyens de déviation (413") est raccordé à ladite première chambre (33) dudit cylindre (31) de ladite au moins une unité piston-cylindre (3), et
un conduit d'entraînement (416), raccordé entre ladite ligne de commande pneumatique (2') ou ladite ligne d'alimentation pneumatique (2), et ladite soupape de distribution (411) pour le contrôle pneumatique de cette dernière, de sorte que, lorsque la pression sur ledit conduit d'entraînement (416) dépasse un premier seuil prédéfini, ladite soupape de distribution (411) passe de ladite position de base à ladite position de commutation.

4. Système (1) selon l'une quelconque des revendications précédentes, **caractérisé**
**en ce que** ledit cylindre (31) de ladite unité piston-cylindre (3) comprend une seconde chambre (34), et
**en ce que**, lorsque la première soupape de distribution (411) prend ladite position de base, un écart (413') relie ladite ligne de commande pneumatique (2') ou ladite ligne pneumatique d'alimentation (2) à ladite seconde chambre (34) dudit piston (31).

5. Système (1) selon la revendication 4, **caractérisé**
**en ce que** ladite au moins une unité piston-cylindre (3) comprend un ressort de rappel (35), disposé pour garder le piston respectif (32) surélevé,
**en ce qu'**elle comprend une unité supplémentaire piston-cylindre (3a) comprenant une première chambre respective (33a) et un ressort de rappel respectif (35a), disposé de façon à garder le piston respectif (32a) élevé, et
**en ce que** lorsque la première soupape de distribution (411) prend ladite position de base, l'autre voie de déviation (413') relie ladite ligne de commande pneumatique (2') ou ladite ligne pneumatique d'alimentation (2) à ladite première chambre (33a) dudit piston (31a) de ladite autre unité piston-cylindre (3a), abaissant ainsi ledit piston (31a), en surmontant la résistance de ce ressort de rappel (35a), élevant ainsi le piston (32) de l'autre unité piston-cylindre (3).

6. Système (1) selon l'une quelconque des revendications 3-5, **caractérisée en ce que** ledit groupe de vanne de régulation (41) comprend également au moins une vanne de régulation de la pression (47), disposée sur ledit conduit d'entrée d'air comprimé (33", 33"a), relié à la première chambre (33, 33a) dudit cylindre (31, 31a) dudit ensemble au moins à piston-cylindrique (3, 3a).

7. Système (1) selon l'une quelconque des revendications 3 à 6, **caractérisé en ce que** ledit groupe de vanne de régulation (51) comprend
une seconde soupape de distribution (511), de préférence actionnée électromécaniquement, mobile entre une première position et une seconde position, raccordée à l'entrée de ladite deuxième soupape de distribution (511) et à la sortie d'un premier conduit de déflexion (512), et d'un second conduit de déflexion (513), sur lequel est disposé une soupape de régulation de pression (514) apte à permettre la limitation de la pression de passage à un deuxième seuil de pression, et
une soupape sélective (515), à laquelle se raccordent lesdites première (512) et deuxième (513) conduites de déviation à l'entrée et ladite ligne de commande pneumatique (2') est reliée à la sortie.

8. Système (1) selon l'une quelconque des revendications 1 ou 2, **caractérisé en ce que** ledit ensemble de vanne de commande (42) comprend un circuit pneumatique à commande bistable ou flip-flop (423), avec ladite ligne de commande pneumatique (2') ou ladite ligne d'alimentation pneumatique (2), et deux sorties dont la première se raccorde à la première chambre (33, 33a) dudit cylindre (31, 31a) de ladite unité piston-cylindre (3, 3a).

9. Système (1) selon l'une quelconque des revendications précédentes, **caractérisé**
**en ce que** ledit cylindre (31) de ladite au moins une unité piston-cylindre (3) comprend une seconde chambre (34), et
**en ce que** la deuxième sortie de ce circuit bistable ou flip-flop (423) est reliée à ladite seconde chambre (34) dudit cylindre (31) de ladite au moins une unité piston-cylindre (3).

10. Système (1) selon la revendication 8, **caractérisé**
**en ce que** dit au moins une unité piston-cylindre (3) comprend un ressort de rappel (35), disposé pour garder le piston respectif (32) élevé,
**en ce qu'**il comprend une unité supplémentaire piston-cylindre (3a), comprenant une première chambre (33a) respective et un ressort de rappel respectif (35a), disposé pour garder le piston respectif (32a) élevé, et
**en ce que** la deuxième sortie de ce circuit bistable ou flip-flop (423) est reliée à ladite première chambre (33a) dudit cylindre (31a) de ladite unité supplémentaire piston-cylindre (3a).

11. Système (1) selon l'une quelconque des revendications 8 à 10, **caractérisé en ce que** ledit groupe de vanne de régulation (42) comprend deux soupapes de distribution (421) et deux soupapes de déflexion (422).

12. Système (1) selon l'une quelconque des revendications 8-11, **caractérisé en ce que** ledit groupe de soupape de réglage (52) comprend une soupape de distribution d'entrée électromécanique (521), mobile entre une première position et une seconde position, dont ladite ligne d'alimentation pneumatique (2) étant raccordée à l'entrée et ladite ligne de commande pneumatique (2') à la sortie.

13. Système (1) selon l'une quelconque des revendications 1-10, **caractérisé en ce qu'**il comprend un ventilateur (6), relié au conduit (33", 33"a) reliant ledit groupe de vanne de régulation (41, 42) à ladite première chambre (33, 33a).

14. Système (1) selon l'une quelconque des revendications précédentes, **caractérisé en ce que** ledit piston (32, 32a) est raccordé audit agrégat d'usinage.

15. Machine-outil (7) pour l'usinage de pièces, en particulier de pièces en bois, plastique, verre et similaires, comprenant
une base (71) permettant de supporter et de bloquer au moins une pièce (P) à usiner,
une traverse (72) disposée au-dessus de ladite base (71) et mobile par rapport à celle-ci, et
une tête multi-axes (73) couplée de manière coulissante à ladite traverse (72), et
au moins un agrégat d'usinage (74) couplé de manière amovible à ladite tête multi-axes (73),
**caractérisé en ce qu'**elle comprend un système d'actionnement pneumatique (1) selon l'une quelconque des revendications précédentes, ledit système d'actionnement pneumatique (1) étant adapté pour actionner ledit agrégat d'usinage (74).

16. Machine-outil (7) selon la revendication précédente, **caractérisée en ce que** ledit groupe de soupape de réglage (51, 52) est agencé sur ladite traverse (72), ledit groupe de vanne de régulation (41, 42) est disposé au niveau dudit agrégat d'usinage (74).
